# EUROPÄISCHE PATENTANMELDUNG

(11) **EP 4 471 515 A1**
(43) Veröffentlichungstag der Anmeldung: **04.12.2024**
(21) Anmeldenummer: 23176096.8
(22) Anmeldetag: 30.05.2023
(51) Int. Cl.: G05B 19/19, B25J 19/00, G05B 19/408

(54) **MASCHINE ODER MASCHINENSYSTEM MIT EINER EINE HALTEBREMSE UMFASSENDEN ACHSE**

(71) Anmelder: Siemens Aktiengesellschaft, 80333 München (DE)
(72) Erfinder: Spielmann, Ralf, 70569 Stuttgart (DE)
(74) Vertreter: Siemens Patent Attorneys

(57) **Zusammenfassung**

Bei einer Maschine (1) oder einem Maschinensystem (1, 2) mit wenigstens einer mit einem Antrieb (M) versehenen Achse (R1 bis R5), durch deren Betrieb ein erstes Maschinenelement (A1) relativ zu einem zweiten Maschinenelement (A2) bezüglich der Achse (R1 bis R5) verstellbar ist, weist die Achse (R1 bis R5) eine Haltebremse (B) auf. Der Antrieb (M) und die Haltebremse (B) werden durch eine mit der Maschine (1) oder dem Maschinensystem (1, 2) verbundene Steuereinrichtung (3) gesteuert, die wenigstens ein Steuerprogramm (P1, P2) mit darin enthaltenen Programmanweisungen sequenziell abarbeitet. Die Erfindung sieht vor, dass die Haltebremse (B) bereits gelöst wird, während eine notwendig vorausgehende Aktion noch ausgeführt wird. Dadurch wird eine Betriebszeit der Maschine (1) durch den Gebrauch der Haltebremse (B) nicht verzögert, was sich auch vorteilhaft auf den Energieverbrauch der Maschine (1) auswirkt.

## Beschreibung

Die Erfindung betrifft ein Verfahren zum Betrieb einer Maschine oder eines Maschinensystems mit wenigstens einer mit einem Antrieb versehenen Achse, durch dessen Betrieb ein erstes Maschinenelement relativ zu einem zweiten Maschinenelement bezüglich der Achse verstellbar ist,
- wobei die Achse eine Haltebremse aufweist,
- wobei der Antrieb und die Haltebremse durch eine mit der Maschine oder dem Maschinensystem verbundene Steuereinrichtung gesteuert werden, die wenigstens ein Steuerprogramm mit darin enthaltenen Programmanweisungen abarbeitet,
- wobei durch wenigstens eine Programmanweisung eine die Achse betreffende Aktionsfolge mit den Aktionen Haltebremse lösen, Achse verfahren, Haltebremse schließen ausgeführt wird,
- wobei durch wenigstens eine vorausgehende Programmanweisung eine notwendig vorausgehende Aktion und/oder durch wenigstens eine nachfolgende Programmanweisung eine notwendig nachfolgende Aktion ausgeführt wird,
- wobei die Aktion Achse verfahren erst nach Abschluss der notwendig vorausgehenden Aktion ausgeführt wird,
- wobei die notwendig nachfolgende Aktion erst nach Abschluss der Aktion Achse verfahren ausgeführt wird.

Ferner betrifft die Erfindung eine Steuereinrichtung für eine derartige Maschine oder ein derartiges Maschinensystem zur Durchführung eines oben genannten Verfahrens.

Weiterhin betrifft die Erfindung eine Maschine oder ein Maschinensystem zur Durchführung eines derartigen Verfahrens mittels einer derartigen Steuereinrichtung.

Zur Herstellung, Verarbeitung oder zum Transport von Produkten werden Maschinen (Werkzeugmaschinen, Roboter etc.) verwendet, bei denen durch lagegeregelte Antriebe Maschinenelemente relativ zueinander bewegt bzw. verstellt werden können. Insbesondere weisen die Maschinen in der Regel mehrere Linear- und/oder Rotationsachsen (auch als Rundachsen bezeichnet) auf, durch die ein Maschinenelement eine lineare Bewegung oder eine Kreisbewegung relativ zu einem anderen Maschinenelement ausführt.

Vorteilhaft sind die Antriebe bzw. Achsen dabei mit einer Steuereinrichtung, z.B. einer numerischen bzw. CNC-Steuerung, verbunden und lagegeregelt. Zur Steuerung der Bewegungen arbeitet die Steuereinrichtung ein Steuerprogramm, z.B. ein Teileprogramm ab, welches sich in der Regel aus einer Vielzahl nacheinander abarbeitbarer Programmanweisungen (z.B. Sätze eines Teileprogramms) zusammensetzt.

In der Regel bewirken die Programmanweisungen, dass die Antriebe betrieben (bewegt) werden und dadurch die damit verbundenen (angetriebenen) Maschinenelemente relativ zueinander bewegt bzw. verstellt werden.

Üblicherweise sind von einem Steuerprogramm jedoch auch Programmanweisungen umfasst, die nicht direkt in Bewegungen von Antrieben umgesetzt werden. Beispielsweise können solche Programmanweisungen das Öffnen oder Schließen von Schaltern oder Ventilen betreffen.

Oft müssen die Programmanweisungen in einer logischen Reihenfolge nacheinander abgearbeitet werden, so dass zunächst auf das Ende der Abarbeitung einer bestimmten Programmanweisung gewartet werden muss, bevor mit einer daran anschließenden Programmanweisung begonnen werden kann. Beispielsweise muss bei der zerspanenden Bearbeitung eines Werkstücks erst eine Ebene Material abgetragen worden sein, bevor die darunter liegende Ebene abgetragen werden kann, oder die Bearbeitung eines Werkstücks mittels einer von einem Werkzeugmaschinensystem umfassten Werkzeugmaschine muss erst abgeschlossen sein, bevor das Werkstück mittels eines ebenfalls von dem Maschinensystem umfassten Roboters aus der Werkzeugmaschine entnommen werden darf.

Häufig verbrauchen Antriebe einer Maschine auch dann (elektrische) Energie, wenn sie sich in Lageregelung befinden, ohne sich zu bewegen, z.B. bei einem Roboter in "Wartestellung". Es ist daher bekannt, Achsen von Maschinen mit Haltebremsen zu versehen, die in angezogenem bzw. geschlossenem Zustand eine Bewegung der damit verbundenen Maschinenelemente bezüglich der betreffenden Achsen verhindern, so dass für die betreffenden Antriebe die Lageregelung (und damit der Energieverbrauch) unterbrochen werden kann, bis ein erneutes Verfahren der Achsen erfolgt.

Zur Steuerung der Haltebremsen sind unterschiedliche Methoden (Verfahren) bekannt. Gemäß einer ersten Methode befinden sich entsprechende Programmanweisungen in dem Steuerprogramm, mittels derer die Haltebremsen bei Bedarf geschlossen oder geöffnet (gelöst) werden können.

Daneben ist es bekannt, Achsen in einem Automatik-Modus zu betreiben, in dem eine Programmanweisung in Form einer Verfahranweisung für einen Antrieb bzw. eine Achse zunächst dazu führt, dass die der Achse zugeordnete Haltebremse gelöst wird und erst im Anschluss daran der Antrieb betrieben bzw. die Achse verfahren wird.

Außerhalb von Werkzeugmaschinen bzw. deren Arbeitsraum gibt es sog. Hilfsachsen, die z.B. bei einer Fräsmaschine der Werkzeugspindel der Fräsmaschine ein neues Werkzeug zuführen oder ein verschlissenes Werkzeug entfernen. Diese Hilfsachsen in Kombination werden z.B. Werkzeugwechsel-Achsen oder Werkzeugmagazin-Achsen genannt. Die Aufgabe der Werkzeugmagazinachsen kann z.B. ein Standard-6-Achs-Roboter bewältigen. Ein derartiges Werkzeugmaschinensystem umfasst somit neben der eigentlichen Werkzeugmaschine noch einen Roboter. Dabei ist der Roboter jedoch lediglich ein gängiges Beispiel für eine Maschine mit wenigstens einer Hilfsachse, die im Verbund mit einer Werkzeugmaschine zum Einsatz kommt. Neben Robotern gibt es noch eine Vielzahl anderer Maschinen wie Werkstückwechsler, Werkzeugwechsler, Magazin Be- und Entladesysteme usw., die ebenfalls programmierbare Hilfsachsen umfassen und Aktionen rund um eine Werkzeugmaschine ausführen.

Oft besitzen die Hilfsachsen die gleichen Eigenschaften wie die "normalen" Bearbeitungsachsen, z.B. die X-, Y- oder Z-Achse im Arbeitsraum. Das heißt, auch die Hilfsachsen können in Lageregelung betrieben werden oder Bewegungen interpolierend in einem Achsverbund ausführen. Mitunter haben die Hilfsachsen auch die gleichen oder ähnliche mechanische oder dynamische Eigenschaften wie die Achsen direkt im Arbeitsraum.

Im Unterschied zu den normalen Bearbeitungsachsen arbeiten die Hilfsachsen jedoch meist nur eine sehr kurze Zeitspanne während eines kompletten Werkstückbearbeitungsprozesses. Beispielsweise wartet ein Be- und Entladeroboter die meiste Zeit vor der Beladetür einer Werkzeugmaschine darauf, dass er ein Werkstück austauschen kann bzw. darf. Während dieser Wartezeit steht er ohne Bewegung. Damit der Roboter sofort nachdem die Werkzeugmaschine die Beladetüre öffnet das Werkstück austauschen kann, steht er mitunter minutenlang in Lageregelung, hält den schweren Rohling und wartet auf den Zeitpunkt das Werkstück auszutauschen. Während der Wartezeit verbraucht der Roboter Energie, um die Achsen in Position halten zu können. Diese Energie in Form von Strom könnte eingespart werden, insbesondere ist das bei sogenannten hängenden Achsen relevant. Eine sich horizontal bewegende Achse benötigt, um in Position zu bleiben relativ wenig Energie, eine sich vertikal bewegende Achse benötigt abhängig vom Gewicht der Achse und des Werkstücks viel Energie um in Position zu bleiben. Dies gilt für beliebige Hilfsachsen und nicht nur für Roboter.

Aus der EP4044419A1 sind ein System und ein Verfahren für einen sicherheitsbewerteten Betrieb eines einen Motor umfassenden Antriebs bekannt, die eine Bewegung einer Last mit gespeicherter potenzieller Energie steuern. Dabei dient ein zweikanaliges Verfahren zur Überwachung und Aufrechterhaltung der Kontrolle über die Last. Ein erster Sicherheitskanal ist so konfiguriert, dass er automatisch den Betrieb einer Haltebremse steuert, die ausreichend Haltekraft bereitstellt, um die gespeicherte potenzielle Energie in der Last zu halten. Ein zweiter Sicherheitskanal ist so konfiguriert, dass er die Drehmomenterzeugung vom Motorantrieb, der den Betrieb des Motors steuert, unabhängig aktiviert und deaktiviert. Wenn die Drehmomenterzeugung durch den Motorantrieb aktiviert ist, können Motorantrieb und Motor ausreichend Drehmoment bereitstellen, um die gespeicherte potenzielle Energie in der Last zu halten. Die Überwachung und anschließende Steuerung jedes Sicherheitskanals gewährleisten, dass ein einzelner Fehler in einem der Kanäle nicht zu einer unerwarteten Freisetzung der gespeicherten potenziellen Energie aus der Last führt.

Allgemein nachteilig bei bekannten Verfahren zum Betreiben einer Maschine, die mit Haltebremsen versehene Achsen umfasst, ist, dass das Schließen und Lösen der Haltebremsen zu Verzögerungen im Programmablauf führen, so dass diese Funktionen in der Praxis häufig nicht verwendet werden. Es werden daher häufig Antriebe unnötig lange in Lageregelung betrieben, obwohl über einen längeren Zeitraum keine Bewegung ausgeführt wird. Dies erhöht den Energieverbrauch der betreffenden Maschine.

Aufgabe der vorliegenden Erfindung ist es daher, den Energieverbrauch einer Maschine mit wenigstens einer mit einer Haltebremse versehenen, lagegeregelten Achse zu reduzieren und Bearbeitungszeiten zu verkürzen.

Diese Aufgabe wird bei einem Verfahren der eingangs genannten Art dadurch gelöst, dass die durch die Programmanweisungen ausgelösten Aktionen automatisch teilweise parallel ausgeführt werden, derart, dass sich an die notwendig vorausgehende Aktion die Aktion Achse verfahren anschließt und die Aktion Haltebremse lösen bereits zuvor durchgeführt wird und/oder dass sich an die Aktion Achse verfahren die notwendig nachfolgende Aktion und die Aktion Haltebremse schließen anschließen.

Die Erfindung bietet den Vorteil, dass die Haltebremse so rechtzeitig gelöst und der Antrieb wieder in Lageregelung genommen werden, dass das Lösen und/oder Schließen der Haltebremse nicht zu einer Verzögerung des Programmablaufs führen. Die Maschine ist somit genauso schnell, wie wenn auf die Haltebremse bzw. deren Benutzung verzichtet werden würde. Die Haltebremse kann so durch die Erfindung intensiv genutzt werden, ohne zeitlichen Nachteil hinsichtlich der Bearbeitungszeit.

Die Verwendung der Haltebremse bietet den Vorteil, dass die betreffende Achse in der Regel bei geschlossener Haltebremse sehr viel weniger Energie verbraucht im Vergleich zu der gleichen Situation (Achsstellung), bei der sich die Achse jedoch in Lageregelung befindet.

Vorteilhaft analysiert die Steuereinrichtung einen durch wenigstens ein Steuerprogramm vorgebebenen Programmablauf und erkennt, dass das Öffnen einer Haltebremse einer Achse vorgezogen werden kann, so dass zu einem Zeitpunkt, zu dem die betreffende Achse verfahren werden kann, insbesondere weil eine notwendigerweise zuvor auszuführende Programmanweisung bzw. eine zuvor auszuführende Aktion abgeschlossen ist, so dass unmittelbar im Anschluss daran die Achse verfahren werden kann und die Haltebremse bereits zuvor gelöst wurde.

Insbesondere analysiert die Steuereinrichtung in einem derartigen Energiesparmodus einen durch Programmanweisungen vorgegebenen Programmablauf und führt Aktionen, für die gemäß der Programmanweisungen eigentlich eine sequenzielle Abarbeitung vorgegeben ist, teilweise parallel aus.

Zur Steuerung der Maschine oder des die Maschine umfassenden Maschinensystems arbeitet die damit verbundene Steuereinrichtung ein Steuerprogramm mit darin enthaltenen Programmanweisungen in der Regel sequenziell ab. Jede Programmanweisung kann dabei eine oder mehrere Aktionen bei der Maschine oder dem Maschinensystem auslösen. Häufig betreffen derartige Aktionen das Verfahren von Achsen der Maschine oder des Maschinensystems. Unter dem "Verfahren einer Achse" (auch "Bewegen einer Achse" oder "Ausführen einer Verfahrbewegung") versteht der Fachmann, dass durch den Betrieb des der Achse zugeordneten Antriebs ein erstes Maschinenelement relativ zu einem zweiten Maschinenelement bezüglich der Achse bewegt (verstellt) wird, und zwar bei einer Linearachse in Achsrichtung und bei einer Rotationsachse (Rundachse) um die Achse rotierend bzw. geschwenkt.

Oft werden durch die Programmanweisungen die Achsen der Maschine nicht direkt adressiert, sondern indirekt über bestimmte Parameter. So kann eine Programmanweisung eine Verfahrbewegung für ein mit der Maschine verbundenes Werkzeug bestimmen und die Steuereinrichtung ermittelt daraus die Verfahranweisungen mit den entsprechenden Aktionen für die zur Ausführung der gewünschten Bewegung erforderlichen Achsen der Maschine, die dazu im Verbund (interpolierend) verfahren werden. Auch die Vorgabe von Bewegungen für bestimmte Teile der Maschine bzw. mit der Maschine verbundene Teile (Werkzeuge, Werkstücke etc.) münden somit in Verfahrbewegungen für die Achsen der Maschine im Sinne der Erfindung.

Insbesondere bei Robotern sind die Rotationsachsen mit Haltebremsen ausgestattet, auch um zu verhindern, dass bei einem Stromausfall die Achsen infolge der Schwerkraft unkontrollierte Bewegungen ausführen, was zur Beschädigung der Maschine und zur Gefahr für in der näheren Umgebung der Maschine befindliche Personen führen könnte.

Ist eine Achse mit einer Haltebremse ausgestattet, so muss diese zunächst gelöst werden, bevor die Achse verfahren werden kann. Nach der Verfahrbewegung wird die Haltebremse in der Regel wieder geschlossen. Die zusammengehörigen Aktionen: "Haltebremse lösen", "Achse verfahren" und "Haltebremse schließen" bilden daher eine in der Regel bei der jeweiligen, mit einer Haltebremse versehenen Achse sehr häufig vorkommende, "logische" Aktionsfolge.

Die genannte Aktionsfolge kann in dem Steuerprogramm durch entsprechende Programmanweisungen jeweils Schritt für Schritt explizit programmiert werden, z.B. in einem Teileprogramm für eine Werkzeugmaschine durch sogenannte M-Befehle zum Öffnen und Schließen der (Halte-)Bremse und G-Befehle zum Verfahren der Achse.

Bei manchen Maschinen bzw. den damit verbundenen Steuereinrichtungen ist es auch möglich, diese in einer Art "Automatik-Modus" bezüglich der Haltebremsen zu betreiben. Dies bedeutet, dass die Aktionen "Haltebremse lösen" und "Haltebremse schließen" nicht explizit in dem Steuerprogramm programmiert werden müssen, sondern die Steuereinrichtung automatisch vor der Ausführung einer Verfahranweisung die Haltebremse löst und nach Ausführung der Verfahranweisung die Haltebremse wieder schließt. Steuerungsintern führt die Programmanweisung "Achse verfahren" so zu einem Aufruf von Unterprogrammen, hinter denen sich die Programmanweisungen zum Öffnen bzw. Schließen der Haltebremse verbergen. Eine einzige Programmanweisung in dem Steuerprogramm kann so implizit eine Reihe an Aktionen der Maschine auslösen.

Vorteilhaft können gemäß der Erfindung die Aktionen Haltebremse lösen und/oder Haltebremse schließen gemäß expliziter Programmanweisungen aus dem Steuerprogramm oder automatisch aus (anhand von anderen) nicht explizit für diese Aktionen in dem Steuerprogramm enthaltenen Programmanweisungen des Steuerprogramms ausgeführt werden. Es macht daher im Zusammenhang mit der Erfindung keinen Unterschied, ob die entsprechenden Programmanweisungen direkt (explizit) in dem Steuerprogramm, z.B. einem Teileprogramm, enthalten sind oder nicht. Die Erfindung funktioniert für beide Varianten.

In der Regel werden beim Betrieb der Maschine die Programmanweisungen sequenziell abgebarbeitet bzw. ausgeführt. Dies ist in der Regel dadurch bedingt, dass die einzelnen Aktionen der Maschine in einer vorgegebenen logischen Reihenfolge ausgeführt werden müssen, um einen gewünschten Erfolg zu erzielen. Insbesondere bauen viele der durch die Bewegung einzelner Maschinenachsen ausgeführten Aktionen der Maschine (z.B. bei der Bearbeitung eines Werkstücks) aufeinander auf, so dass zunächst eine bestimmte Aktion (insbesondere Bewegung) abgeschlossen sein muss, bevor mit der darauffolgenden Aktion begonnen werden kann. Viele Aktionen können oder dürfen daher nicht parallel ausgeführt werden.

Bezüglich einer bestimmten Programmanweisung zum Verfahren einer Achse (Verfahranweisung) bedeutet das, dass zunächst der Abschluss einer notwendig vorausgehenden Aktion abgewartet werden muss, bevor mit der Umsetzung der Verfahranweisung begonnen werden kann. "Notwendig vorausgehend" bedeutet dabei, die Aktion muss notwendigerweise dem Verfahren der Achse vorausgehen bzw. sie muss bereits abgeschlossen sein, bevor mit dem Verfahren der Achse begonnen werden darf.

Insbesondere geht die notwendig vorausgehende Aktion dem Verfahren der Achse unmittelbar voraus. Es handelt sich demnach insbesondere um die letzte (notwendige) Aktion aus einer Folge von Aktionen, die erst abgeschlossen sein müssen, bevor die betrachtete Achse verfahren werden darf.

Es ist möglich, dass sich an die notwendig vorausgehende Aktion noch weitere, nicht die betrachtete Achse betreffende Aktionen anschließen, die jedoch nicht notwendigerweise dem Verfahren der Achse vorausgehen müssen und daher auch parallel zum Verfahren der Achse (oder noch später) ausgeführt werden können.

Beispielsweise könnte vor dem Verfahren der betrachteten Achse auch für eine weitere Achse der Maschine oder des Maschinensystems die Aktionsfolge Haltebremse lösen, Achse verfahren, Haltebremse schließen ausgeführt werden, wobei es sich dann bei der Aktion Achse verfahren der weiteren Achse um die notwendig vorausgehende Aktion handelt, die bereits abgeschlossen sein muss, bevor mit dem Verfahren der betrachteten Achse begonnen werden darf. Das Schließen der Haltebremse der weiteren Achse kann jedoch parallel dazu erfolgen. Es handelt sich dabei daher nicht um eine notwendig vorausgehende Aktion.

Ebenso kann bei der betrachteten Achse die Haltebremse bereits gelöst werden, während die weitere Achse noch verfahren wird.

Ebenso wie am Anfang der Aktionsfolge für die betreffende Achse kann auch an deren Ende Zeit eingespart werden, indem nach Abschluss des Verfahrens der Achse (der Aktion Achse verfahren) mit der notwendig nachfolgenden Aktion begonnen wird und parallel dazu die Haltebremse der betrachteten Achse wieder geschlossen wird.

Analog zu er notwendig vorausgehenden Aktion handelt es sich auch hier insbesondere um die notwendig nachfolgende Aktion aus einer Folge notwendig nachfolgender Aktionen, die nach dem Verfahren der Achse als erstes ausgeführt wird. Es handelt sich demnach insbesondere um die erste (notwendige) Aktion aus einer Folge von Aktionen, die erst gestartet werden dürfen, nachdem die betrachtete Achse verfahren wurde.

Insbesondere wird unmittelbar nach Abschluss des Verfahrens der Achse mit der notwendig nachfolgenden Aktion begonnen.

Auch bei der notwendig nachfolgenden Aktion kann es sich um das Verfahren einer weiteren Achse handeln, deren Start (gemäß einer geforderten logischen Reihenfolge von Maschinenbewegungen) erst erfolgen darf, nachdem das Verfahren der betrachteten Achse abgeschlossen ist.

Das Verfahren wenigstens einer weiteren Achse vor oder nach dem Verfahren der betrachteten Achse ist wohl in der Praxis der häufigste Anwendungsfall, bei dem durch parallel ausgeführte Aktionen (das Öffnen bzw. Schließen einer Haltebremse einer bestimmten Achse parallel zu Aktionen, die andere Achsen der Maschine oder des Maschinensystems betreffen, insbesondere parallel zum Verfahren einer weiteren Achse) Maschinenzeit bzw. Bearbeitungszeit eingespart werden kann.

Weiterhin kann die Steuereinrichtung durch die entsprechenden Analysemittel in einfacher Weise feststellen, welche Achsen von der jeweils programmierten Verfahrbewegung der Maschine betroffen sind, woraus sich wiederum die notwendig vorausgehende bzw. die notwendig nachfolgende (Verfahr-) Aktion ergibt.

Anders als bei den genannten Beispielen können die notwendig vorausgehende Aktion oder die notwendig nachfolgende Aktion auch völlig andere Aktionen als das Verfahren (Bewegen) von Achsen betreffen, z.B. das Öffnen oder Schließen eines Greifers, das An- und Abschalten eines Förderbandes oder das Öffnen oder Schließen eines Ventils.

In der Regel bauen die Verfahrbewegungen der Achsen der Maschine in einer logischen Reihenfolge aufeinander auf, um einen gewünschten Erfolg zu erzielen. Beispielsweise muss die Bearbeitung eines Werkstücks an einer bestimmten Stelle abgeschlossen sein, bevor die Bearbeitung an anderer Stelle beginnt, oder das Werkzeug muss in eine Werkzeugwechselposition gebracht worden sein, bevor es ausgewechselt werden kann.

Vorteilhaft kann in der Steuereinrichtung hinterlegt werden, welche Aktionen notwendig vorausgehende Aktionen und/oder welche der Aktionen notwendig nachfolgende Aktionen sind. In der Regel wird es sich bei den notwendig vorausgehenden Aktionen um Verfahrbewegungen anderer Achsen der Maschine oder des Maschinensystems handeln, die beendet sein müssen, bevor (zum Erreichen des gewünschten Erfolgs) mit der Verfahrbewegung der betrachteten Achse begonnen werden kann.

Analog wird es sich in der Regel bei den notwendig nachfolgenden Aktionen um Verfahrbewegungen anderer Achsen der Maschine oder des Maschinensystems handeln, die (zum Erreichen des gewünschten Erfolgs) erst dann begonnen werden können, wenn die jeweilige Verfahrbewegung der betrachteten Achse abgeschlossen ist.

Beispielsweise kann so in der Steuereinrichtung bestimmt und hinterlegt werden, dass erst die Verfahrbewegungen bestimmter Achsen einer Werkzeugmaschine abgeschlossen sein müssen, bevor Verfahrbewegungen bestimmter Hilfsachsen, z.B. eines Be- und Entladeroboters für die Werkzeugmaschine, verfahren werden dürfen.

Durch das Festlegen, welche Aktionen notwendig vorausgehende Aktionen bzw. welche Aktionen notwendig nachfolgende Aktionen sind und das Hinterlegen der so festgelegten Aktionen in der Steuereinrichtung kann der Bediener vorgeben, welche Aktionen parallel ausgeführt werden dürfen. Insbesondere kann der Bediener dadurch festlegen, ob dafür neben dem Verfahren von Achsen auch andere Aktionen in Frage kommen.

Bei den im Zusammenhang mit der Erfindung betrachteten Achsen, bei denen ein Öffnen und Schließen von Haltebremsen erfindungsgemäß aufeinander abgestimmt wird, kann es sich um Achsen einer Werkzeugmaschine, die ein Werkzeug zum Bearbeiten eines Werkstücks bewegen (Hauptachsen), um Hilfsachsen oder eine Mischung aus Haupt- und Hilfsachsen handeln.

Bei einer vorteilhaften Ausführungsform der Erfindung wird in der Steuereinrichtung eine Zeitdauer hinterlegt, die bestimmt, wann vor dem voraussichtlichen (zeitlichen) Ende der notwendigen vorausgehenden Aktion mit dem Lösen der Haltebremse der Achse begonnen wird. So kann sichergestellt werden, dass die Haltebremse der betreffenden Achse auch tatsächlich gelöst ist und sich der Antrieb in Lageregelung befindet, bevor seitens der Steuereinrichtung die Anweisung zum Verfahren der Achse erfolgt.

Eine andere vorteilhafte Ausführungsform der Erfindung sieht vor, dass die notwendig vorausgehende Aktion eine Verfahranweisung für die weitere Achse ist und in der Steuereinrichtung eine Wegstrecke bzw. ein Winkel hinterlegt ist, die bzw. der ein Delta zu dem Ende eines durch die Verfahranweisung bestimmten Verfahrweges angibt, welches vorgibt, wann mit dem Lösen der Haltebremse der Achse begonnen wird. So kann z.B. sichergestellt werden, dass die Haltebremse der betreffenden Achse stets gelöst wird, wenn der Restweg, den das durch die Maschine bewegte Werkzeug noch zurücklegen muss, kleiner als die eingestellte Wegstrecke, z.B. kleiner 10mm ist.

Insbesondere bei numerischen Steuerungen sind Programmanweisungen, die auf das voraussichtliche zeitliche oder distanzielle (eine Restwegstrecke betreffende) Ende einer Verfahrbewegung abzielen, aus dem Stand der Technik bereits bekannt. Es kann daher für die genannten Anwendungen darauf zurückgegriffen werden.

Gemäß der Erfindung ist das Maschinensystem mit einer Steuereinrichtung verbunden. Diese umfasst wenigstens eine Steuerung, die in der Regel ein Steuerprogramm ausführt. Sie kann jedoch auch mehrere Steuerungen umfassen, z.B. eine CNC-Steuerung (Computerized Numerical Control) für eine von dem Maschinensystem umfasst Werkzeugmaschine und eine PLC-Steuerung (Programmable Logic Control) für einen von dem Maschinensystem umfassten Roboter.

Entsprechend wird von der Steuereinrichtung in der Regel ein Steuerprogramm abgearbeitet. Es können aber auch mehrere Steuerprogramme (Teileprogramm, PLC-Programm) vorhanden sein, die insbesondere auch parallel abgearbeitet werden können.

Im Fall mehrerer Steuerprogramme bzw. mehrerer Steuerungen ist auf die Synchronisation der Programme bzw. Steuerungen zu achten.

Besonders vorteilhaft ist bei der erfindungsgemäßen Steuereinrichtung ein Energiesparmodus einstellbar, in dem die Steuereinrichtung automatisch überprüft, ob in wenigstens einem von der Steuereinrichtung ausgeführten Steuerprogramm explizit oder implizit Programmanweisungen zum Öffnen oder Schließen von Haltebremsen für Achsen eines von der Steuereinrichtung gesteuerten Werkzeugmaschinensystem enthalten sind. Trifft dies zu, so überprüft die Steuereinrichtung automatisch, ob die genannten Programmanweisungen auch zumindest teilweise parallel zu anderen durch Programmanweisungen bedingten Aktionen des Werkzeugmaschinensystems ausgeführt werden können, um dadurch die Maschinenlaufzeit (Bearbeitungszeit) für mittels des Werkzeugmaschinensystems durchgeführte Tätigkeiten (Werkstückbearbeitung) zu reduzieren. Trifft auch dies zu, so optimiert die Steuereinrichtung die Abarbeitung der Programmanweisungen entsprechend.

Stellt die Steuereinrichtung in dem Energiesparmodus hingegen fest, dass die Werkzeugmaschine wenigstens eine Achsen mit Haltebremse umfasst, die während der Abarbeitung des Steuerprogramms über einen längeren Zeitraum nicht verfahren wird und dennoch währenddessen die Haltebremse offen bleiben soll (gemäß den vorgegebene Programmanweisungen), so schließt die Steuereinrichtung die Haltebremse automatisch und öffnet sie wieder automatisch, letzteres rechtzeitig vor dem beabsichtigten Beginn der nächsten Bewegung der Achse.

Vorteilhaft ist in der Steuereinrichtung hinterlegbar, für welche der mit Haltebremsen versehenen Achsen ein automatisches und/oder vorzeitiges Öffnen und Schließen vorgesehen wird.

Vorteilhaft ist in der Steuereinrichtung ein Zeitraum für eine Achse mit Haltebremsen hinterlegbar, der bestimmt, wie lange ein Zeitraum des Stillstands zwischen zwei Abschnitten, in denen die Achse verfahren wird, sein darf, ohne dass die Haltebremse geschlossen wird. Dadurch wird ein ständiges Öffnen und Schließen der Haltebremse zwischen kurz aufeinanderfolgenden Verfahr-Abschnitten verhindert.

Dieser Zeitraum kann sich auf alle Achsen oder nur bestimmte Achsen mit einer Haltebremse auswirken. Ggf. können auch für verschiedene Achsen unterschiedliche Zeiträume festgelegt werden.

Eine Ausführungsform der Erfindung sieht vor, dass ein erfindungsgemäßes Maschinensystem eine erste und eine zweite Maschine umfasst, z.B. eine Werkzeugmaschine und einen Roboter, wobei die vorausgehende Programmanweisung die erste Maschine und die Programmanweisung die zweite Maschine betrifft. Beispielsweise könnte es sich bei der vorausgehende Programmanweisung für die erste Maschine um einen Verfahrbefehl (z.B. G0 oder G1) für das in die Werkzeugmaschine eingespannte Werkzeug und bei der Programmanweisung um einen Werkzeugwechselbefehl (M-Befehl) für einen Werkzeugwechselroboter handeln.

Die betrachteten Programmanweisungen und Aktionen müssen also nicht auf eine Maschine beschränkt sein, sondern können unterschiedliche Maschinen betreffen.

Durch eine erfindungsgemäße Steuereinrichtung können - insbesondere mittels einer einzigen davon umfassten Recheneinrichtung - mehrere Maschinen gleichzeitig gesteuert werden. Hierfür kann die erfindungsgemäße Steuereinrichtung ein Steuerprogramm oder mehrere Steuerprogramme (letzteres auch parallel) abarbeiten.

Die erfindungsgemäße Steuereinrichtung kann für den Fall, dass das Maschinensystem mehrere Maschinen umfasst, aber auch wenigstens eine erste Steuerung zur Steuerung der ersten Maschine und eine zweite Steuerung zur Steuerung der zweiten Maschine umfassen, wobei die erste Steuerung ein erstes Steuerprogramm und die zweite Steuerung ein zweites Steuerprogramm ausführt und wobei die vorausgehende Programmanweisung in dem ersten Steuerprogramm und die Programmanweisung in dem zweiten Steuerprogramm enthalten ist.

Die Erfindung kann demnach sehr flexibel auch über mehrere Steuerungen und mehrere damit gesteuerte Maschinen (und die davon ausgeführten Aktionen) hinweg ausgeführt werden.

Die eingangs gestellte Aufgabe wird ferner gelöst durch eine Steuereinrichtung für eine Maschine oder ein Maschinensystem zur Durchführung eines Verfahrens nach einem der Ansprüche 1 bis 11.

Die eingangs gestellte Aufgabe wird weiterhin gelöst durch eine Maschine oder ein Maschinensystem nach Anspruch 14 mit einer damit verbundenen Steuereinrichtung nach Anspruch 12 oder 13 zur Durchführung eines Verfahrens nach einem der Ansprüche 1 bis 11.

Die eingangs gestellte Aufgabe wird darüber hinaus gelöst durch einen digitalen Zwilling einer Steuereinrichtung nach Anspruch 12 oder 13 und einer Maschine oder eines Maschinensystems nach Anspruch 14 zur Simulation eines Verfahrens nach einem der Ansprüche 1 bis 11.

Es ist üblich und bekannt, beabsichtigte Programmabläufe von Maschinen vorab zunächst anhand von Simulationen in einer virtuellen Umgebung zu testen. Dabei sind sowohl die Maschinen als auch die Steuereinrichtung lediglich virtuell in Form ihrer virtuellen Zwillinge vorhanden. Anders verhält es sich mit dem in der Steuereinrichtung ablaufenden Steuerprogramm. Hier kann das in der virtuellen Steuereinrichtung ablaufende Steuerprogramm zumindest nahezu identisch sein mit dem in der realen Steuereinrichtung ablaufenden Steuerprogramm. Dadurch lässt sich der durch den Einsatz der Maschinen beabsichtigte Erfolg zunächst gefahrlos verifizieren und Programmabläufe lassen sich anhand der einen Simulationsrechner umfassenden Simulationsumgebung ggf. verbessern und optimieren. Auch die genannten, durch die Erfindung erzeugten Vorteile lassen sich so anhand der digitalen Zwillinge in der Simulation verifizieren.

Die Erfindung wird nachfolgend anhand von Ausführungsbeispielen exemplarisch näher beschrieben und erläutert. Dabei zeigen:
- FIG 1: Ein Werkzeugmaschinensystem zur Durchführung eines erfindungsgemäßen Verfahrens,
- FIG 2: den prinzipiellen Aufbau einer derartigen Achse mit einer Haltebremse,
- FIG 3: den zeitlichen Verlauf bei der Abarbeitung von Programmanweisungen,
- FIG 4: den zeitlichen Verlauf bei der Abarbeitung von Programmanweisungen,
- FIG 5: Verfahrensschritte bei der Durchführung eines erfindungsgemäßen Verfahrens.

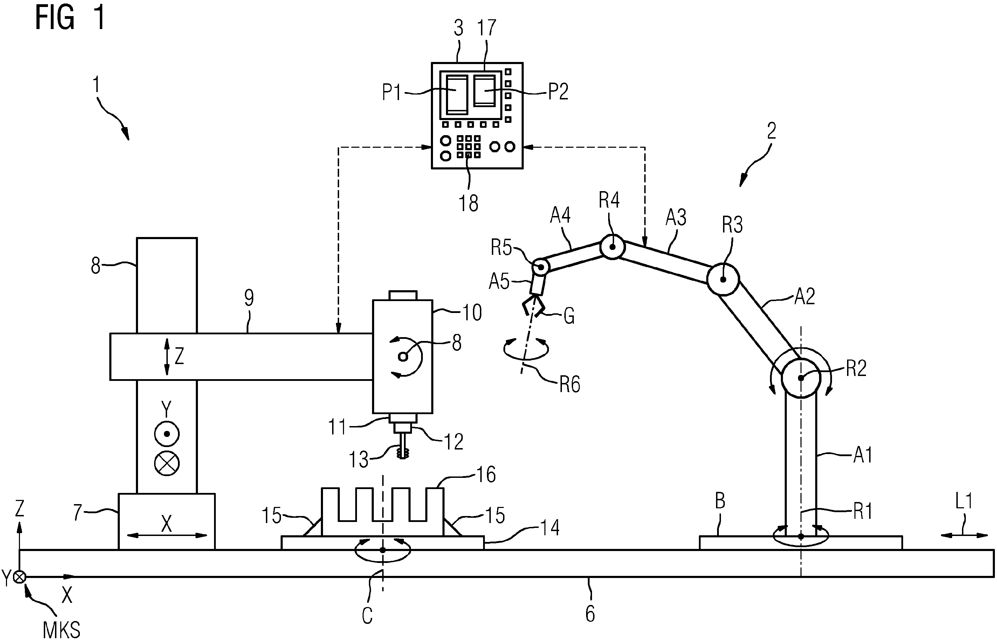

In FIG 1 ist schematisiert ein Werkzeugmaschinensystem dargestellt. Dieses umfasst eine Werkzeugmaschine 1 zur Bearbeitung eines Werkstücks 16 sowie einen Handlingsroboter (Roboter) 2. Ferner umfasst das Werkzeugmaschinensystem eine mit der Werkzeugmaschine 1 sowie dem Roboter 2 verbundene numerische Steuereinrichtung in Form einer CNC-Steuerung 3 zur Steuerung sowohl der Werkzeugmaschine 1 als auch des Roboters 2.

Die dargestellte Werkzeugmaschine 1 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 1 ortsfesten Maschinenkoordinatensystems MKS verstellbar ist.

Das erste Tragelement 7 ist über einen in x-Richtung verstellbaren Linearantrieb (nicht dargestellt) mit einer ruhenden Basis 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 1 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit der ruhenden Basis 6 verbunden und an dem Werkzeugtisch 14 ist mittels der Werkzeughalter 15 ein Werkstück 16 befestigt.

Die Werkzeugmaschine 1 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 1 ist mit der CNC-Steuerung 3 verbunden, die anhand eines Steuerprogramms in Form eines Teileprogramms P1 und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms P1, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 1 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm P1 wird üblicherweise in einer aus Sicht der CNC-Steuerung 3 externen Recheneinrichtung, insbesondere einem CAD/CAM-System (nicht dargestellt) und einem eventuell dem CAD/CAM-System nachgeschalteten sogenannten Postprozessor (nicht dargestellt) außerhalb der CNC-Steuerung 3 erzeugt und von dort, insbesondere über ein Netzwerk (nicht dargestellt), auf die CNC-Steuerung 3 übertragen.

Bei der Abarbeitung des Teileprogramms P1 erzeugt die CNC-Steuerung 3 in einem bestimmten Takt, dem Interpolationstakt, Lagesollwerte x, y und z für die Linearachsen sowie Winkellagesollwerte β und γ (nicht dargestellt) für die Rundachsen B und C. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der CNC-Steuerung 3 auch die Dynamik der Relativbewegung bzw. der einzelnen Achsen betreffende Größen, insbesondere die Geschwindigkeit, die Beschleunigung oder der Ruck, ermittelbar bzw. einstellbar.

Der Roboter 2 gemäß dem Ausführungsbeispiel umfasst eine Linearachse L1 mit einem Linea-Antrieb (nicht dargestellt), mittels dem eine Roboter-Basis B bezüglich des Maschinen-Koordinatensystems MKS (mit den Achsen x, y und z) in x-Richtung verfahren werden kann.

Der Roboter 2 umfasst neben der Roboter-Basis B weitere Maschinenelemente, nämlich einen mit der Roboter-Basis B drehbar verbundenen Roboterarm mit den Armgliedern A1 bis A5. Zwischen zwei benachbarten Armgliedern befindet sich jeweils ein Gelenk, mit dem in Verbindung mit jeweils einem Antrieb ein an dem Gelenk angreifendes Armglied bezüglich des anderen an dem Gelenk angreifenden Armgliedes schwenkbar ist. Im Ausführungsbeispiel sind die Gelenke bzw. die horizontal ausgerichteten Rundachsen mit R2 bis R5 bezeichnet.

Ferner umfasst der Roboter 2 eine Rundachse R1, die vertikal, d. h. parallel zur z-Achse ausgerichtet ist und um die das Armglied A1 und damit der gesamte Roboterarm um einen beliebigen Winkel schwenkbar ist. D. h., bei der Rundachse R1 können beliebige Winkel von 0° bis 360° eingestellt werden. Prinzipiell ist der Roboterarm endlos um R1 rotierbar.

Die Linearachse L1 und die Rundachsen R1 bis R5 bilden eine kinematische Kette. Dadurch werden insbesondere durch das Verstellen einer Achse die Antriebe der in der Kette nachfolgenden Achsen bezüglich ihrer Position und/oder Orientierung im Raum verändert, ohne dabei selbst verstellt bzw. verfahren zu werden.

An dem losen Ende des Roboterarms (Armglied A5) befindet sich ein Greifer G, mit dem Teile, insbesondere Werkzeuge oder Werkstücke, aufgegriffen und transportiert werden können, letzteres insbesondere in den Arbeitsraum der Werkzeugmaschine 1 hinein oder aus dem Arbeitsraum der Werkzeugmaschine 1 heraus. Zum Greifen oder Ablegen von Teilen kann der Greifer G geöffnet oder geschlossen werden. Vorteilhaft ist der Greifer G zudem um eine Rundachse R6 schwenkbar.

Aus Sicht der Werkzeugmaschine 1 und der CNC-Steuerung 3 stellen die Achsen L1 und R1 bis R6 des Roboters 2 sogenannte Hilfsachsen dar, da sie nicht direkt zu der Relativbewegung zwischen dem Werkzeug 13 und dem Werkstück 16 und damit allgemein zur Bearbeitung des Werkstücks 16 beitragen.

Zur Steuerung der Bewegung und damit der Achsen L1 und R1 bis R6 des Roboters 2 arbeitet die CNC-Steuerung 3 im Ausführungsbeispiel ein eigenes Steuerprogramm in Form eines PLC-Programms P2 ab. Es wäre jedoch ebenso möglich, dass beide Maschinen durch ein und dasselbe Steuerprogramm gesteuert werden.

Die beiden Steuerprogramm P1 und P2 laufen zumindest teileweise synchron bzw. synchronisiert zueinander ab, insbesondere dadurch, dass sich in dem einen Programm (z.B. dem Teileprogramm P1) Programmaufrufe (z.B. M-Befehle) befinden, die die Ausführung von Programmroutinen in dem anderen Programm (PLC-Programm P2) auslösen.

Während der Bearbeitung des Werkstücks 16 befindet sich der Roboter 2 zumindest die meiste Zeit in einer - in der Regel durch das PLC-Programm P2 vorgegebenen bzw. vorgebbaren - Wartestellung. Um in der bestimmten Wartestellung zu verharren, befinden sich insbesondere die Roboter-Achsen R2 bis R5 in Lageregelung, wodurch die Antriebe dieser Achsen ständig Energie verbrauchen. Ohne diese Lageregelung würden sich die Armglieder A2 bis A5 in Folge der Schwerkraft mehr oder weniger unkontrolliert nach unten in Richtung der Basis 6 bewegen.

Es ist bekannt, Achsen von Maschinen, insbesondere von Robotern, mit Haltebremsen auszuführen, durch die eine zuletzt vor dem Schließen der Haltebremse eingenommene Achsstellung beibehalten wird, ohne dass sich der betreffende Antrieb in Lageregelung befindet. Der Stromverbrauch der Achse ist in diesem Zustand stark reduziert.

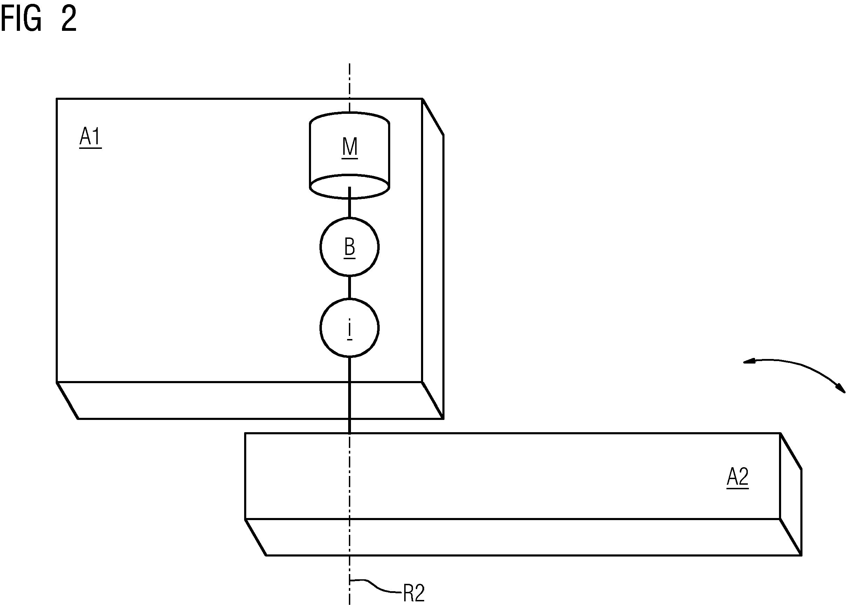

Den prinzipiellen Aufbau einer derartigen Achse mit einer Haltebremse veranschaulicht FIG 2.

Dargestellt ist in stark vereinfachter Prinzip-Darstellung die Achse (auch Rundachse, Rotationsachse oder Schwenkachse) R2. Mittels eines Gelenks (nicht dargestellt) ist das Armglieder A2 (zweites Maschinenelement) bezüglich der Achse R2 gegenüber dem Armglied A1 (erstes Maschinenelement) schwenkbar. Als Antrieb für diese Bewegung dient der Motor M, der gewöhnlich als Elektromotor ausgeführt ist. Damit sich die beiden Armglieder A1 und A2 im stromlosen Zustand des Motors M nicht relativ zueinander bewegen können, ist eine Haltebremse (Bremse) B vorgesehen. Ferner ist der Achse R2 im Ausführungsbeispiel noch ein Getriebe mit der Übersetzung i zugeordnet, durch das ein von dem Motor M erzeugtes und auf das Armglied A2 ausgeübtes Drehmoment gesteigert werden kann.

Die Komponenten Motor M, Bremse B sowie Getriebe i sind zur Ausübung ihrer jeweiligen Funktion fest mit dem Armglied A1 verbunden.

Soll nun mit dem aufgezeigten Werkzeugmaschinensystem das Werkstück 16 bearbeitet werden, so ist es möglich, dass hierfür mehrere Werkzeuge 13 benötigt werden, entweder weil zur Bearbeitung unterschiedliche Werkzeuge 13 benötigt werden oder weil das aktuell in der Werkzeugmaschine 1 befindliche Werkzeug 13 verschlissen ist und ausgetauscht werden muss.

Für den Austausch des Werkzeugs 13 ist der Roboter 2 vorgesehen. Dieser greift mit seinem Greifer G das Werkzeug 13 und entnimmt es aus dem Werkzeughalter 12. Das entnommene Werkzeug 13 kann in einem Werkzeugmagazin (nicht dargestellt) abgelegt und in analoger Weise ein neues Werkzeug 13 aus dem Werkzeugmagazin entnommen und in den Werkzeughalter 12 eingesetzt werden.

Nach dem Wechsel des Werkzeugs 13 wartet der Roboter 2 in einer Wartestellung auf eine neue Aufgabe. Dieser Zustand kann sich über einen längeren Zeitraum (Minuten oder gar Stunden) erstrecken. Befinden sich dabei die Achsen des Roboters 2 in Lageregelung, so ist dies mit einem wesentlichen Energieverbrauch verbunden, obwohl der Roboter 2 während dieser Zeit keine Aufgabe (Aktion) ausführt. Es ist daher vorteilhaft, wenn zumindest die Rundachsen R2 bis R5 des Roboters 2 - wie in Figur 2 veranschaulicht - mit Haltebremsen versehen und diese geschlossen werden, so dass die betreffenden Antriebe während der Wartezeit keinen Strom verbrauchen.

Die Verwendung von Haltebremsen hat jedoch den Nachteil, dass diese erst geöffnet werden müssen, bevor der Roboter 2 bzw. dessen Achsen Verfahrbewegungen ausführen können. Zum Öffnen und Schließen der Bremsen wird jedoch Zeit benötigt, die sich negativ auf die zur Bearbeitung des Werkstücks 16 benötigte Bearbeitungszeit auswirken kann.

Die Erfindung sieht daher vor, dass mittels der CNC-Steuerung 3 der programmierte Arbeitsablauf analysiert wird, so dass Wartezeiten vermieden werden können. So erkennt die CNC-Steuerung 3, dass gemäß der durch den vorgegebenen Programmablauf vorgegebenen Reihenfolge zunächst mittels der Werkzeugmaschine 1 das Werkzeug 13 in eine Werkzeugwechselposition gebracht wird. Anschließend erhält der Roboter 2 die Programmanweisung, das Werkzeug 2 mittels des Greifers G, der hierfür zunächst entsprechend positioniert werden muss, aus dem Werkzeughalter 12 zu entnehmen. Hierfür sind zunächst die Haltebremsen der Achsen R2 bis R5 zu lösen.

Durch die Analyse des Programmablaufs erkennt die CNC-Steuerung 3, dass die Haltebremsen bereits gelöst werden können, während die Werkzeugmaschine 1 das Werkzeug 13 in eine Werkzeugwechselposition bringt. Insbesondere ist in der CNC-Steuerung 3 hinterlegt, dass für das (gleichzeitige) Lösen der Haltebremsen der Rundachsen R2 bis R5 500ms benötigt werden und das Lösen der Bremsen 100ms vor dem Abschluss der notwendig vorausgehenden Aktion, im Ausführungsbeispiel also dem Verfahren des Werkzeugs 13 in die Werkzeugwechselposition, abgeschlossen sein soll. Dadurch werden die Bremsen der Rundachsen R2 bis R5 des Roboters 2 bereits gelöst und die Antriebe in Lageregelung versetzt, während das Werkzeug 13 mittels der Werkzeugmaschine 1 in die Werkzeugwechselposition gebracht wird. Erfolgt anschließend für den Roboter 2 die Programmanweisung zur Entnahme des Werkzeugs 13 aus dem Werkzeughalter 12, so kann unverzüglich mit dem Verfahren der Roboterachsen begonnen werden, ohne zuvor auf das Lösen der Haltebremsen warten zu müssen.

Zum Erkennen des Programmablaufs bzw. der von den beteiligten Maschinen bzw. deren Achsen nacheinander auszuführenden Verfahrbewegungen umfasst die CNC-Steuerung 3 entsprechende Analysemittel. Diese sind bei modernen CNC-Steuerungen bereits bekannt und in der Regel ohnehin vorhanden. So ist es üblich, dass eine CNC-Steuerung zum Erkennen und Vermeiden möglicher Kollisionen zwischen relativ zueinander bewegten Teilen (Maschinenelementen, Werkzeugen, Werkstücken etc.) um bis zu 100 Programmanweisungen (Sätze) "in die Zukunft sehen" (Stichwort "Look-Ahead-Funktion") und die nachfolgenden Bewegungsabläufe zunächst in einer Simulation durchführen. Insbesondere lassen sich so für einen bestimmten zukünftigen Zeitraum alle wesentlichen Aktionen des Werkzeugmaschinensystems, insbesondere die Verfahrbewegungen der beweglichen Maschinenelemente bzw. der Achsen, sehr genau bestimmen und vorhersagen. Auf diese bekannten Funktionen kann die Erfindung aufsetzen, um optimierte Zeitpunkte zum Öffnen und Schließen von Haltebremsen zu ermitteln.

Alternativ kann die CNC-Steuerung 3 auch nur ermitteln, ob sich an die gerade ausgeführte Aktion eine Verfahrbewegung für eine Achse mit einer Haltebremsen anschließt. Vorteilhaft ist in der CNC-Steuerung 3 eine Zeitdauer und/oder ein Verfahrweg (Wegstrecke oder Winkel) hinterlegt, die bestimmen, wann vor dem Ende der gerade ausgeführten (notwendig vorherigen) Aktion mit dem Lösen der Haltebremse begonnen wird. Werden zum Beispiel für das Lösen der Handbremse 300ms benötigt, so kann als sinnvolle Zeitdauer beispielsweise 500ms vorgegeben werden. Dies bedeutet, dass 500ms vor dem voraussichtlichen Ende der gerade ausgeführten Aktion mit dem Lösen der Haltebremse begonnen wird. Dieser Vorgang ist somit planmäßig 200ms vor dem Erreichen des Endes der gerade ausgeführten Aktion abgeschlossen, so dass unmittelbar nach deren Ende die Haltebremse bereits gelöst ist und mit dem Verfahren der Achse begonnen werden kann.

Betrifft die gerade ausgeführte (notwendig vorherige) Aktion das Verfahren einer Achse (ggf. auch indirekt über das Verfahren eines Maschinenelements), so kann in der CNC-Steuerung 3 auch ein Verfahrweg (Wegstrecke oder Winkel) hinterlegt, sein, der bestimmt, wann mit dem Lösen der Achse begonnen wird. Beispielsweise können so 10mm oder 10° vorgegeben werden, so dass die CNC-Steuerung das Lösen der Haltebremse startet, sobald der restliche Verfahrweg 10mm oder der restliche Drehwinkel einer Achse 10° unterschreitet. Auch damit wird erreicht, dass sich an das Ende der notwendig vorherigen Aktion unmittelbar das Verfahren der betreffenden Achse anschließt.

Das vorausschauende Lösen der Haltebremsen führt dazu, dass der Werkzeugwechsel und damit die Bearbeitung des Werkstücks 16 insgesamt verkürzt wird, umso mehr, indem das vorausschauende Lösen der Haltebremsen nicht auf das Ausführungsbeispiel beschränkt ist und Haltebremsen während der Bearbeitung eines Werkstücks oft hunderte Male geöffnet und geschlossen werden. Bei einer rein sequenziellen Abarbeitung kann dies zu einer erheblichen Verlängerung der zur Bearbeitung des Werkstücks insgesamt benötigten Bearbeitungszeit führen. Die Erfindung erhöht so bei den Benutzern des Werkzeugmaschinensystems die Akzeptanz bei der Benutzung der Haltebremsen.

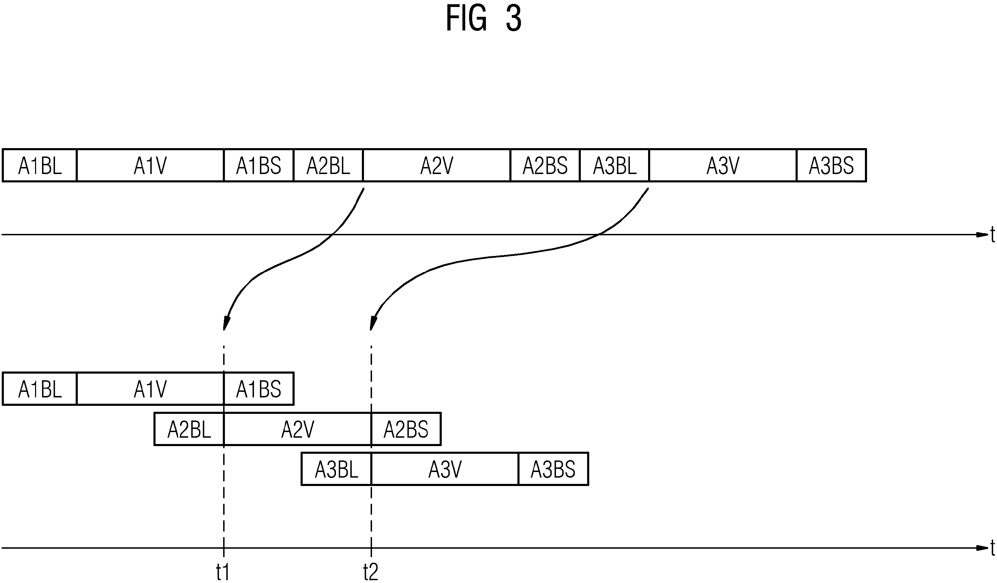

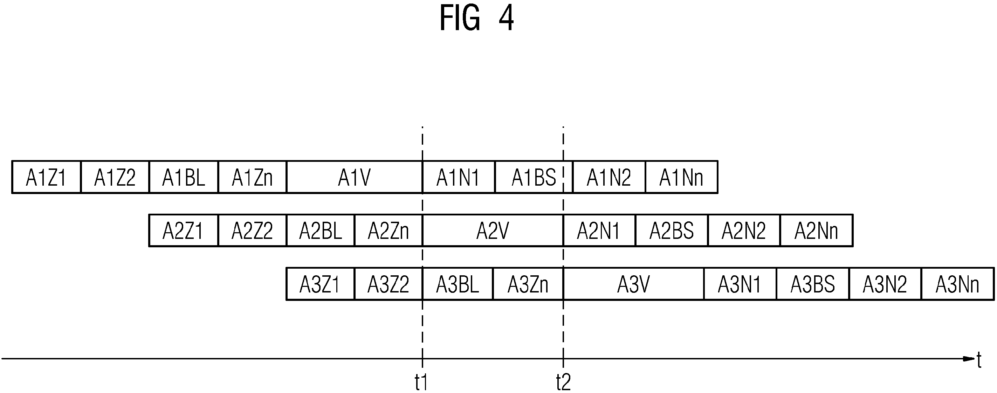

Die nachfolgenden Figuren 3 und 4 dienen zur weiteren Veranschaulichung und Verdeutlichung der Erfindung.

So zeigt Figur 3 im oberen Teil eine streng sequenzielle Abarbeitung von Programmanweisungen. Durch die Programmanweisungen sollen nacheinander eine erste, eine zweite und eine dritte Achse (nicht dargestellt) verfahren werden. Die Blöcke A1V, A2V und A3V stehen dabei jeweils für das Verfahren der ersten, zweiten oder dritten Achse. A1BL, A2BL und A3BL stehen für das Lösen der Haltebremsen der jeweiligen Achse und analog dazu bezeichnen A1BS, A2BS und A3BS das Schließen der Haltebremse der betreffenden Achse. Anhand des Zeitstrahls t ist die benötigte Zeit für die jeweilige Aktion ersichtlich.

Aus der unteren Hälfte von Figur 3 ist ersichtlich, wie sich das sequenzielle Verfahren der Achsen verkürzt, wenn bestimmte Aktionen teilweise parallel ausgeführt werden. So veranschaulicht die Figur, dass die Aktion A2BL (Lösen der Haltebremse der zweiten Achse) bereits begonnen wird, während die Aktion A1V (Verfahren der ersten Achse) noch ausgeführt wird. Umgekehrt wird die Aktion A1BS (Schließen der Haltebremse der ersten Achse) parallel zum Verfahren der zweiten Achse ausgeführt.

Auch in Bezug auf die dritte Achse werden Aktionen teilweise parallel ausgeführt. So wird die Aktion A3BL (lösen der Haltebremse der dritten Achse) bereits ausgeführt, während die zweite Achse noch verfahren wird (Aktion A2V) und die Haltebremse der zweiten Achse wird geschlossen (Aktion A2BS), während die dritte Achse bereits verfahren wird (Aktion A3V).

Wie aus dem Zeitstrahl t ersichtlich ist, schließt sich zum Zeitpunkt t1 das Verfahren der zweiten Achse (Aktion A2V) direkt an das Ende des Verfahrens der ersten Achse (Aktion A1V) an und entsprechend schließt sich im Zeitpunkt t2 an das Ende des Verfahrens der zweiten Achse (Aktion A2V) direkt das Verfahren der dritten Achse (Aktion A3V) an.

Wie ferner aus einem Vergleich des oberen Teils und des unteren Teils von Figur 3 ersichtlich ist, konnte die benötigte Zeitdauer zum sequenziellen Verfahren der drei Achsen damit insgesamt erheblich verkürzt werden. So führt das Öffnen und/oder Schließen von Haltebremsen nicht zu einer Verlängerung der zum sequenziellen Verfahren der Achsen benötigten Zeitdauer im Vergleich zu entsprechenden Achsen ohne Haltebremsen. Durch die Verwendung der Haltebremsen kann daher Energie gespart werden, ohne dass dafür erhöhte Bearbeitungszeiten in Kauf genommen werden müssten. Dadurch wird die Akzeptanz bei der Verwendung von Haltebremsen erhöht.

Die bislang am sequenziellen Verfahren mehrerer Achsen veranschaulichte Vorgehensweise im Zusammenhang mit der Erfindung ist nicht auf diesen Anwendungsfall beschränkt. Für die Erfindung ist es ausreichend, wenn lediglich eine Achse, die mit einer Haltebremse versehen ist, verfahren wird. Beispielsweise könnte zunächst eine Reinigung des Werkstücks vorgesehen sein, bevor dieses aus der Werkzeugmaschine entnommen wird. So wäre vor der Entnahme des Werkstücks zunächst der Abschluss der Reinigungsaktion abzuwarten. Das Lösen der Handbremse könnte dann bereits vor dem Ende der Reinigungsaktion (also parallel dazu) erfolgen.

Weiterhin ist es im Zusammenhang mit der Erfindung nicht erforderlich, dass die bezüglich einer Achse nacheinander ausgeführten Aktionen Haltebremse lösen, Achse Verfahren und Haltebremse schließen stets unmittelbar aufeinanderfolgen. Maßgeblich für den Erfolg der Erfindung ist lediglich, dass dem Verfahren der Achse die bestimmte, notwendig vorausgehende Aktion vorausgeht und abgeschlossen ist und sich wenigstens im Wesentlichen das Verfahren der Achse unmittelbar daran anschließt, wobei erfindungsgemäß die Haltebremse der betreffenden Achse bereits vor diesem Übergang geöffnet wurde. Dadurch wird der größtmögliche Zeitvorteil erreicht.

Das Ausführungsbeispiel gemäß Figur 4, welches auf das Ausführungsbeispiel gemäß Figur 3 aufbaut, veranschaulicht die Situation, dass sich das Öffnen und Schließen der Haltebremse einer Achse nicht unmittelbar an das Verfahren dieser Achse anschließt. So sind im Zusammenhang mit der ersten Achse noch die Blöcke A1Z1, A1Z2 und A1Zn ersichtlich, die Aktionen bezeichnen, die vor der Verfahr-Aktion A1V (zuvor) stattfinden sollen. Insbesondere kann es sich dabei um Wartezeiten handeln, während derer die betreffende Achse keine weitere Aktion ausführt.

Weiterhin sind im Zusammenhang mit der ersten Achse A1 noch die Blöcke A1N1, A1N2 und A1Nn ersichtlich, die Aktionen bezeichnen, die nach der Verfahr-Aktion A1V stattfinden sollen. Insbesondere kann es sich auch hierbei um Wartezeiten handeln, während derer die betreffende Achse keine weitere Aktion ausführt.

Analog zu der ersten Achse A1 sind auch bei der zweiten und dritten Achse Aktionen vorhanden, die jeweils vor oder nach der Verfahr-Aktion stattfinden sollen.

Wie aus der Figur 4 ersichtlich ist, ist das Lösen und Schließen der Haltebremsen jeweils in die übrigen, vor bzw. nach dem Verfahren der betreffenden Achse stattfindenden Aktionen "eingebettet" und schließt sich nicht mehr unmittelbar an den Beginn oder das Ende der Verfahrbewegungen an. Auch diese Vorgehensweise ist von der Erfindung umfasst.

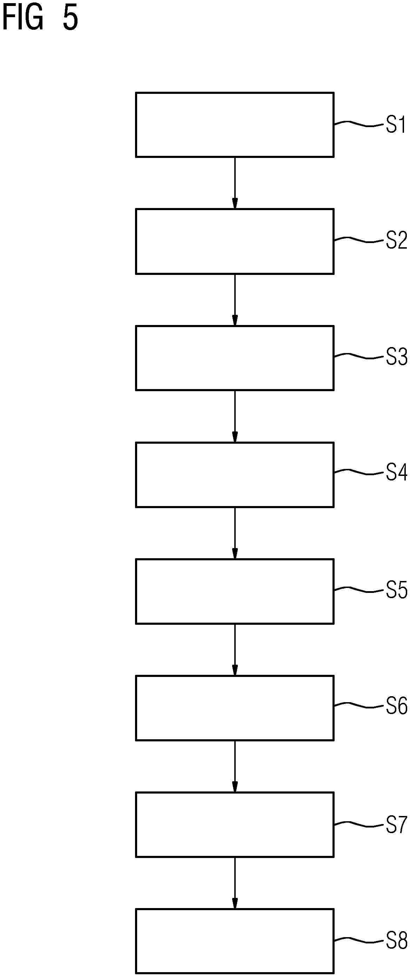

Nachfolgend werden die wesentlichen Verfahrensschritte bei der Durchführung eines erfindungsgemäßen Verfahrens nochmals in Form eines Ablaufdiagramms gemäß FIG 5 verdeutlicht.

In einem ersten Verfahrensschritt S1 werden wenigstens eine Maschine mit wenigstens einer verfahrbaren Achse, die eine Haltebremse umfasst, eine Steuereinrichtung sowie ein Steuerprogramm mit darin enthaltenen Programmanweisungen bereitgestellt.

In einem Verfahrensschritt S2 wird das Steuerprogramm ausgeführt, wobei die Steuereinrichtung analysiert, ob wenigstens eine die Achse betreffende Programmanweisung mit der Aktionsfolge mit den Aktionen Haltebremse lösen, Achse verfahren und Haltebremse schließen ansteht. Wird eine derartige Programmanweisung erkannt, so analysiert die Steuereinrichtung in einem Verfahrensschritt S3, welche vorausgehende Programmanweisung dem Verfahren der Achse vorausgeht und welche dadurch bestimmte, notwendig vorausgehende Aktion unmittelbar vor dem Verfahren der Achse ausgeführt werden muss. Ggf. wurde zuvor in der Steuereinrichtung hinterlegt, welche durch Programmanweisungen festgelegte Aktionen notwendig vorausgehende Aktionen sind, beispielsweise Verfahranweisungen für weitere Achsen oder Elemente der Maschine.

In einem Verfahrensschritt S4 bestimmt die Steuereinrichtung, wann (insbesondere in welchem Zeitpunkt) mit dem Öffnen der Haltebremse begonnen wird, derart, dass die Haltebremse (insbesondere unmittelbar) vor Ende der notwendig vorausgehenden Aktion abgeschlossen ist, so dass unmittelbar in Anschluss an die notwendig vorausgehende Aktion mit dem Verfahren der Achse begonnen werden kann.

Der Beginn des Lösens der Haltebremse kann abhängig von in der Steuereinrichtung hinterlegter Maßangaben wie einer Zeitdauer oder einer Wegstrecke bestimmt werden.

In einem Verfahrensschritt S5 wird die Haltebremse gelöst, ggf. der Abschluss der notwendig vorausgehenden Aktion abgewartet und die Achse verfahren.

In einem Verfahrensschritt S6 analysiert die Steuereinrichtung anhand des Steuerprogramms, welche notwendig nachfolgende Aktion im Anschluss an das Verfahren der Achse ausgeführt werden soll und startet unmittelbar nach dem Verfahren der Achse mit deren Ausführung. Bei der notwendig nachfolgenden Aktion handelt es sich insbesondere um eine Verfahranweisung für eine weitere Achse der Maschine oder des Maschinensystems.

In einem Verfahrensschritt S7 prüft die Steuereinrichtung, ob innerhalb eines vorgegebenen oder vorgebbaren Zeitraums eine weitere Verfahranweisung für die betrachtete Achse erfolgt. Ist dies nicht der Fall, so wird die Haltebremse der Achse in einem Verfahrensschritt S8 geschlossen, insbesondere während der Ausführung der notwendig nachfolgenden Aktion. Andernfalls bleibt die Haltebremse der Achse geöffnet, zumindest solange, bis auch die nachfolgende Verfahranweisung für die betrachtete Achse erledigt ist.

## Patentansprüche

1. Verfahren zum Betrieb einer Maschine (1) oder eines Maschinensystems (1, 2) mit wenigstens einer mit einem Antrieb (M) versehenen Achse (R1 bis R5), durch dessen Betrieb ein erstes Maschinenelement (A1) relativ zu einem zweiten Maschinenelement (A2) bezüglich der Achse (R1 bis R5) verstellbar ist,
- wobei die Achse (R1 bis R5) eine Haltebremse (B) aufweist,
- wobei der Antrieb (M) und die Haltebremse (B) durch eine mit der Maschine (1) oder dem Maschinensystem (1, 2) verbundene Steuereinrichtung (3) gesteuert werden, die wenigstens ein Steuerprogramm (P1, P2) mit darin enthaltenen Programmanweisungen abarbeitet,
- wobei durch wenigstens eine Programmanweisung eine die Achse (R1 bis R5) betreffende Aktionsfolge mit den Aktionen Haltebremse lösen (A1BL, A2BL, A3BL), Achse verfahren (A1V, A2V, A3V), Haltebremse schließen (A1BS, A2BS, A3BS) ausgeführt wird,
- wobei durch wenigstens eine vorausgehende Programmanweisung eine notwendig vorausgehende Aktion (A1V) und/oder durch wenigstens eine nachfolgende Programmanweisung eine notwendig nachfolgende Aktion (A3V) ausgeführt wird,
- wobei die Aktion Achse verfahren (A2V) erst nach Abschluss der notwendig vorausgehenden Aktion (A1V) ausgeführt wird,
- wobei die notwendig nachfolgende Aktion (A3V) erst nach Abschluss der Aktion Achse Verfahren (A2V) ausgeführt wird,
- wobei die durch die Programmanweisungen ausgelösten Aktionen automatisch teilweise parallel ausgeführt werden, derart, dass sich an die notwendig vorausgehende Aktion (A1V) die Aktion Achse verfahren (A2V) anschließt und die Aktion Haltebremse (A2BL) lösen bereits zuvor durchgeführt wird und/oder dass sich an die Aktion Achse verfahren (A2V) die notwendig nachfolgende Aktion (A3V) und die Aktion Haltebremse schließen (A2BS) anschließen.

2. Verfahren nach Anspruch 1, wobei die wenigstens eine vorausgehende Programmanweisung und/oder die wenigstens eine nachfolgende Programmanweisung jeweils eine weitere Achse (R1 bis R5) der Maschine (1) oder des Maschinensystems (1, 2) betrifft.

3. Verfahren nach Anspruch 2, wobei auch bei der weiteren Achse (R1 bis R5) die Aktionsfolge mit den Aktionen Haltebremse lösen (A1BL, A2BL, A3BL), Achse verfahren (A1V, A2V, A3V), Haltebremse schließen (A1BS, A2BS, A3BS) ausgeführt wird.

4. Verfahren nach einem der vorherigen Ansprüche, wobei die Aktionen Haltebremse lösen und/oder Haltebremse schließen gemäß expliziter Programmanweisungen aus dem Steuerprogramm (P1, P2) ausgeführt werden.

5. Verfahren nach einem der Ansprüche 1 bis 4, wobei die Aktionen Haltebremse lösen (A1BL, A2BL, A3BL) und/oder Haltebremse schließen (A1BS, A2BS, A3BS) automatisch durch nicht explizit für diese Aktionen in dem Steuerprogramm (P1, P2) enthaltene Programmanweisungen des Steuerprogramms (P1, P2) ausgeführt werden.

6. Verfahren nach einem der vorherigen Ansprüche, wobei in der Steuereinrichtung (3) hinterlegbar ist, welche der Aktionen notwendig vorausgehende Aktionen (A1V) und/oder welche der Aktionen notwendig nachfolgende Aktionen (A3V) sind.

7. Verfahren nach einem der vorherigen Ansprüche, wobei in der Steuereinrichtung (3) eine Zeitdauer hinterlegt ist, die bestimmt, wann vor dem voraussichtlichen zeitlichen Ende der notwendigen vorausgehenden Aktion (A1V) mit der Aktion Haltebremse Lösen (A2BL) der Achse (R2) begonnen wird.

8. Verfahren nach einem der vorherigen Ansprüche, wobei die notwendig vorausgehende Aktion (A1V) eine Verfahranweisung für die weitere Achse (R1) ist und in der Steuereinrichtung (3) eine Wegstrecke bzw. ein Winkel hinterlegt ist, die bzw. der ein Delta zu dem Ende eines durch die Verfahranweisung bestimmten Verfahrweges angibt, welches vorgibt, wann mit der Aktion Haltebremse Lösen (A2BL) der Achse (R2) begonnen wird.

9. Verfahren nach einem der vorherigen Ansprüche, wobei die Maschine als Werkzeugmaschine (1) oder als Roboter (2) ausgebildet ist.

10. Verfahren zum Betrieb eines Maschinensystems (1, 2) mit einer ersten (1) und einer zweiten Maschine (2) nach einem der vorherigen Ansprüche, wobei die vorausgehende Programmanweisung die erste Maschine (1) und die Programmanweisung die zweite Maschine (2) betrifft.

11. Verfahren zum Betrieb eines Maschinensystems (1, 2) mit einer ersten (1) und einer zweiten Maschine (2) nach einem der vorherigen Ansprüche, wobei die Steuereinrichtung (3) eine erste Steuerung zur Steuerung der ersten Maschine (1) und eine zweite Steuerung zur Steuerung der zweiten Maschine (2) umfasst, wobei die erste Steuerung ein erstes Steuerprogramm (P1) und die zweite Steuerung ein zweites Steuerprogramm (P2) ausführt und wobei die vorausgehende Programmanweisung in dem ersten Steuerprogramm und die Programmanweisung in dem zweiten Steuerprogramm enthalten ist.

12. Steuereinrichtung für eine Maschine oder ein Maschinensystem (1, 2) zur Durchführung eines Verfahrens nach einem der Ansprüche 1 bis 11, wobei die Maschine (1) oder das Maschinensystem (1, 2) wenigstens eine mit einem Antrieb (M) versehenen Achse (R1 bis R5) umfasst, durch dessen Betrieb ein erstes Maschinenelement (A1) relativ zu einem zweiten Maschinenelement (A2) bezüglich der Achse (R1 bis R5) verstellbar ist,
- wobei die Achse (R1 bis R5) eine Haltebremse (B) aufweist,
- wobei der Antrieb (M) und die Haltebremse (B) durch die mit der Maschine (1) oder dem Maschinensystem (1, 2) verbundene Steuereinrichtung (3) gesteuert werden und die Steuereinrichtung (3) hierfür wenigstens ein Steuerprogramm (P1, P2) mit darin enthaltenen Programmanweisungen abarbeitet,
- wobei durch wenigstens eine Programmanweisung eine die Achse (R1 bis R5) betreffende Aktionsfolge mit den Aktionen Haltebremse lösen (A1BL, A2BL, A3BL), Achse verfahren (A1V, A2V, A3V), Haltebremse schließen (A1BS, A2BS, A3BS) ausgeführt wird,
- wobei durch wenigstens eine vorausgehende Programmanweisung eine notwendig vorausgehende Aktion (A1V) und/oder durch wenigstens eine nachfolgende Programmanweisung eine notwendig nachfolgende Aktion (A3V) ausgeführt wird,
- wobei die Aktion Achse verfahren (A2V) erst nach Abschluss der notwendig vorausgehenden Aktion (A1V) ausgeführt wird,
- wobei die notwendig nachfolgende Aktion (A3V) erst nach Abschluss der Aktion Achse Verfahren (A2V) ausgeführt wird,
- wobei die durch die Programmanweisungen ausgelösten Aktionen automatisch teilweise parallel ausgeführt werden, derart, dass sich an die notwendig vorausgehende Aktion (A1V) die Aktion Achse verfahren (A2V) anschließt und die Aktion Haltebremse (A2BL) lösen bereits zuvor durchgeführt wird und/oder dass sich an die Aktion Achse verfahren (A2V) die notwendig nachfolgende Aktion (A3V) und die Aktion Haltebremse schließen (A2BS) anschließen.

13. Steuereinrichtung (3) nach Anspruch 12, umfassend eine CNC-Steuerung (3) oder ausgebildet als CNC-Steuerung (3).

14. Mit einer Steuereinrichtung (3) nach Anspruch 12 oder 13 verbundene Maschine (1) oder verbundenes Maschinensystem (1, 2) mit wenigstens einer mit einem Antrieb (M) versehenen Achse (R1 bis R5), durch dessen Betrieb ein erstes Maschinenelement (A1) relativ zu einem zweiten Maschinenelement (A2) bezüglich der Achse (R1 bis R5) verstellbar ist, wobei die Achse (R1 bis R5) eine Haltebremse (B) aufweist, wobei der Antrieb (M) und die Haltebremse (B) durch die Steuereinrichtung (3) gesteuert werden, die wenigstens ein Steuerprogramm (P1, P2) mit darin enthaltenen Programmanweisungen abarbeitet und die dadurch ein Verfahren nach einem der Ansprüche 1 bis 11 ausführt.

15. Digitaler Zwilling einer Steuereinrichtung nach Anspruch 12 oder 13 und einer Maschine (1) oder eines Maschinensystems (1, 2) nach Anspruch 14 zur Simulation eines Verfahrens nach einem der Ansprüche 1 bis 11.
